# EUROPÄISCHE PATENTSCHRIFT

(11) **EP 0 913 067 B1**
(45) Veröffentlichungstag und Bekanntmachung des Hinweises auf die Patenterteilung: **07.05.2003**
(21) Anmeldenummer: 97934413.2
(22) Anmeldetag: 11.07.1997
(51) Int. Cl.: H04Q 7/38, H04Q 3/00

(54) **VERFAHREN UND ANORDNUNG ZUR VERKNÜPFUNG VON KOMMUNIKATIONSNETZEN**
PROCESS AND DEVICE FOR INTERCONNECTING TELECOMMUNICATION NETWORKS
PROCEDE ET DISPOSITIF D'ETABLISSEMENT DE LIAISON ENTRE DES RESEAUX DE COMMUNICATIONS

(30) Priorität: 15.07.1996 DE 19628426
(43) Veröffentlichungstag der Anmeldung: 06.05.1999
(73) Patentinhaber: T-Mobile Deutschland GmbH, 53227 Bonn (DE)
(72) Erfinder: KLUMB, Bernd, D-53844 Troisdorf (DE); PAAS, Ralf-Michael, D-53359 Rheinbach (DE)
(74) Vertreter: Riebling, Peter, Dr.-Ing.
(86) Internationale Anmeldenummer: DE9701466
(87) Internationale Veröffentlichungsnummer: WO98003007

(56) Entgegenhaltungen:
- WO-A-94/28684
- DE-A- 3 621 990
- US-A- 5 497 412
- "FLUGPASSAGIER-TELEFONSYSTEM TFTS" WERKSTOFFE UND KORROSION, Bd. 47, Nr. 4, 1.April 1996, Seiten 46-49, XP000591390
- FERNANDEZ E ET AL: "LE TFTS ALCATEL 9810: UN SYSTEME EUROPEEN DE COMMUNICATIONS AIR-SOL" COMMUTATION ET TRANSMISSION, Bd. 13, Nr. 4, 1.Januar 1991, Seiten 5-16, XP000275599
- HIRATA S ET AL: "SIGNALING PROTOCOL FOR PERSONAL MOBILE TELECOMMUNICATIONS" INTERNATIONAL CONFERENCE ON UNIVERSAL PERSONAL COMMUNICATIONS, Bd. 1, 1.Januar 1993, Seiten 163-167, XP000541900
- CAMPET G: "THE TFTS AIR-TO-GROUND TELEPHONE SYSTEM" ELECTRICAL COMMUNICATION, 1.Oktober 1994, Seiten 353-358, XP000489634

## Beschreibung

Die Erfindung betrifft ein Verfahren und eine Anordnung zur Verknüpfung eines teilnehmerbezogenen Kommunikationsnetzes mit einem nicht-teilnehmerbezogenen Kommunikationsnetz.
Aus dem Stand der Technik sind unter anderem zwei prinzipielle Typen von Kommunikationsnetzen bekannt. Einerseits nicht-teilnehmerbezogene Netze wie in der Regel Telefon-Festnetze, bei denen typische Informationen des Netzes, besonders Rufnummern, nicht einem speziellen Teilnehmer sondern z.B. einem Endgerät zugeordnet sind. Das Netz besitzt in solchen Netzen normalerweise keine Information über den speziellen Teilnehmer, kann also von sich selbst aus z.B. keine Anrufe gezielt diesem Teilnehmer zustellen. Der Teilnehmer ist gezwungen, für seine Erreichbarkeit selbst zu sorgen, z.B. durch Programmierung von Rufumleitungen.

Weiter sind teilnehmerbezogene Kommunikationsnetze bekannt, bei denen die typischen Informationen des Netzes einem Teilnehmer zugeordnet sind. Hierfür werden z.B. spezielle Teilnehmerdatenbanken angelegt, die bei Bedarf aktualisiert werden können. Das Netz hat somit gezielteren Zugriff auf Daten des Teilnehmers bzw. auf den Teilnehmer selbst. Wird beispielsweise ständig der Aufenthaltsort des Teilnehmers erfaßt, so kann das Netz z.B. Rufe für diesen Teilnehmer gezielt an diesen durchstellen. Typische Beispiele für solche Netze sind Mobilfunknetze, als Beispiele sei auf GSM-Netze bzw. AMPS-Netze sowie Funkrufnetze verwiesen. Teilnehmerdaten sind in diesen Netzen in Heimatdatenbanken HLR sowie in Besucherdatenbanken VLR gespeichert.

Aus der WO 94/28684 ist ein mobiles Kommunikationssystem bekannt, welches für den Betrieb z.B. in Flugzeugen oder auf Schiffen erweitert wurde. Dazu wird das Mobiltelekommunikationsnetz um eine weitere Vermittlungsstelle sowie um eine weitere Basisstation erweitert, welche jeweils an Bord des Flugzeuges oder Schiffes installiert sind. Damit wird sichergestellt, dass die Teilnehmer des Telekommunikationsnetzes, die sich an Bord des Schiffes oder Flugzeuges befinden, mit der an Bord befindlichen Vermittlung bzw. Basisstation kommunizieren können.

Aus der Schrift "International Conference on Universal Personal Communications", Band 1, 01. Januar 1993, Seiten 163 bis 167; von S. Hirata et al. sind Lösungen bekannt, wie zwei oder mehrere teilnehmerbezogene mobile Kommunikationsnetze miteinander verbunden werden können, insbesondere wird ein spezielles Signalisierungsprotokoll beschrieben, welches eine Kommunikation verschiedener teilnehmerbezogener Telekommunikationsnetze erlaubt.

Die beiden oben zitierten Schriften zeigen jedoch keine Möglichkeiten auf, wie eine gezielte Erreichbarkeit von Teilnehmern in nicht-teilnehmerbezogenen Kommunikationsnetzen erreicht werden kann.

Aufgabe der vorliegenden Erfindung ist es nun, eine gezielte Erreichbarkeit von Teilnehmern in nicht-teilnehmerbezogenen Kommunikationsnetzen zu ermöglichen, die die oben genannten Nachteile behebt.

Diese Aufgabe wird gelöst durch die Merkmale der Ansprüche 1 und 3. Im teilnehmerbezogenen Kommunikationsnetz liegen alle Informationen vor, die nötig sind, um z.B. einen Anruf gezielt zu einem Teilnehmer durchzustellen. Werden im nicht-teilnehmerbezogenen Kommunikationsnetz und/oder zwischen den Netzen aktuelle Teilnehmerinformationen gespeichert, so kann gerade durch die Verbindung mit einem teilnehmerbezogenen Kommunikationsnetz eine gezielte Weiterleitung von solchen Rufen auch in das nicht-teilnehmerbezogenen Kommunikationsnetz erfolgen.
Hält sich nun ein Teilnehmer im Bereich eines nicht-teilnehmerbezogenen Kommunikationsnetzes auf, der vorzugsweise bereits Teilnehmer des teilnehmerbezogenen Kommunikationsnetzes ist, so werden seine aktuellen Teilnehmerinformationen wie z.B. der Aufenthaltsort, das Endgerät, unter dem er erreichbar ist etc. gespeichert. Die Erfassung der Informationen kann automatisch und/oder manuell erfolgen. Diese Speicherung kann vorzugsweise in einem einzigen zentralen Speichermittel erfolgen, das vorteilhaft direkt und/oder über eine Schnittstelleneinrichtung an das nicht-teilnehmerbezogenen Kommunikationsnetz angebunden werden kann. Diese Schnittstelleneinrichtung kann z.B. als Vermittlungsstelle wie eine Gateway-Vermittlungsstelle ausgebildet sein. Im Bereich des Speichermittels kann auch vorteilhaft eine Umsetzung der Signalisierung der beiden Netze erfolgen.

Zur Anbindung des Speichermittels bzw. einer effektiven Zusammenarbeit der Netze können zusätzliche Signalisierungsprozeduren nötig werden. Eine spezielle Ausgestaltung hiervon kann dem nachfolgenden Beispiel entnommen werden. Dieses erläutert den Erfindungsgegenstand am Beispiel eines Mobilfunknetzes, hier nach dem GSM-Standard, als teilnehmerbezogenes Kommunikationsnetz sowie mit einem Terrestrischen Flug Telefon System (TFTS) als nicht-teilnehmerbezogenem Kommunikationsnetz. Es sind jedoch insbesondere auch andere Mobilfunknetze denkbar, ebenso wie als nicht-teilnehmerbezogene Kommunikationsnetze auch Telefon-Festnetze o.ä. möglich sind.

Dabei zeigen:
- Fig. 1:: Übersicht über die Netzstruktur
- Fig. 2 - 6:: Übersicht über den Signalisierungsablauf, im einzelnen:

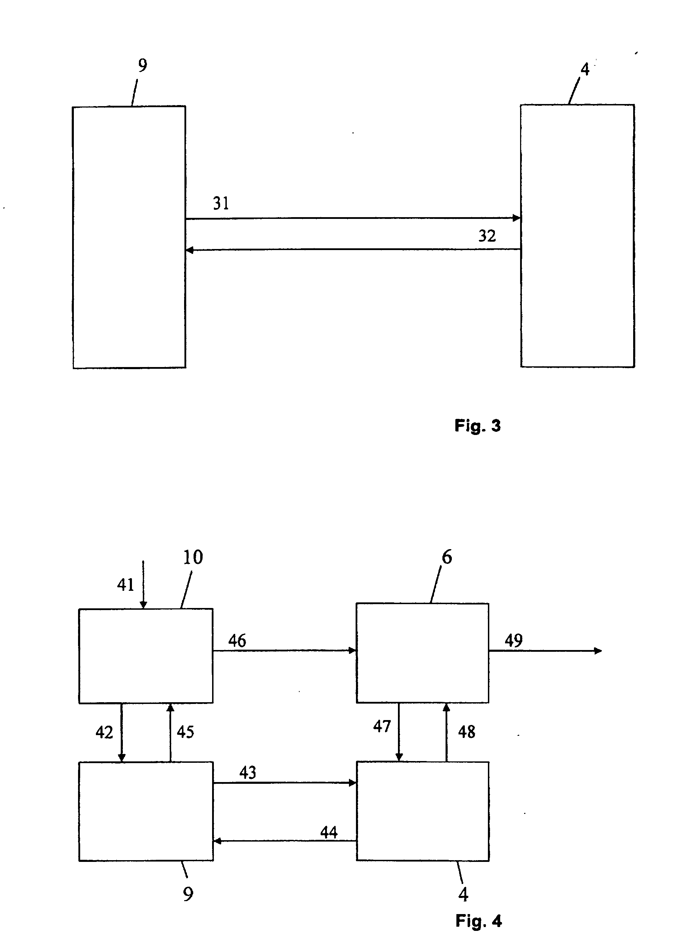

- Fig. 2:: MAP Signalisierung; Registrierung vom GSM in TFTS:
- Fig. 3:: MAP Signalisierung bei ankommendem Anruf (Mobile Terminated Call);
- Fig. 4:: Signalisierung bei ankommendem Anruf (Mobile Terminated Call);

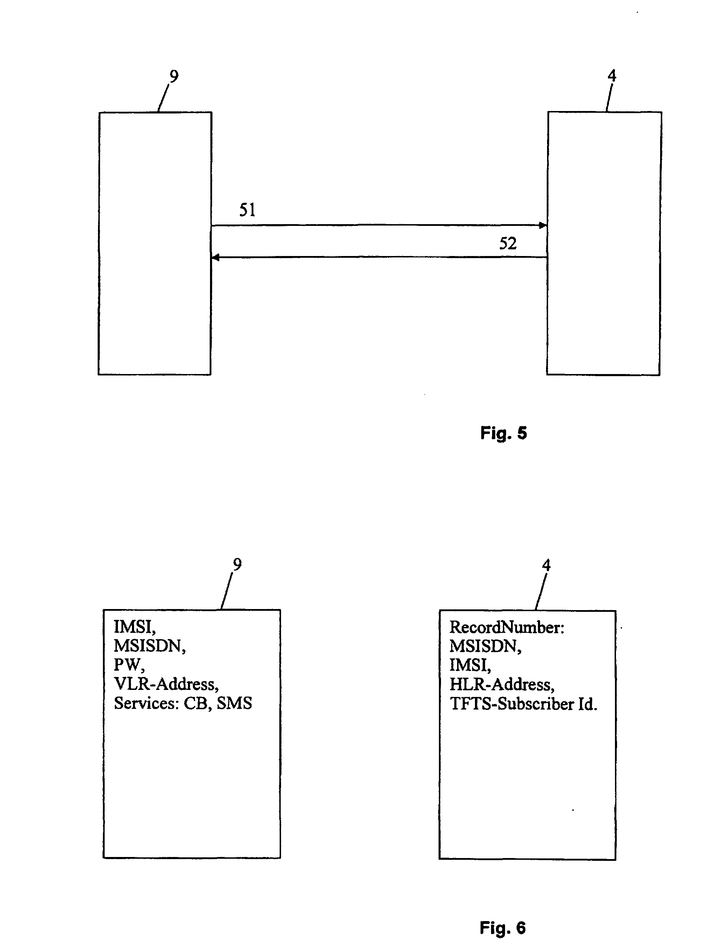

- Fig. 5:: MAP Signalisierung: Löschen des TFTS Record;
- Fig. 6:: Dateninhalte im GSM-HLR und im TFTS-LR.

Im folgenden wird als Beispiel ein Konzept zur Anbindung von Global System for Mobile Communication (GSM) an das Terrestrische Flug Telefon System (TFTS) erläutert.

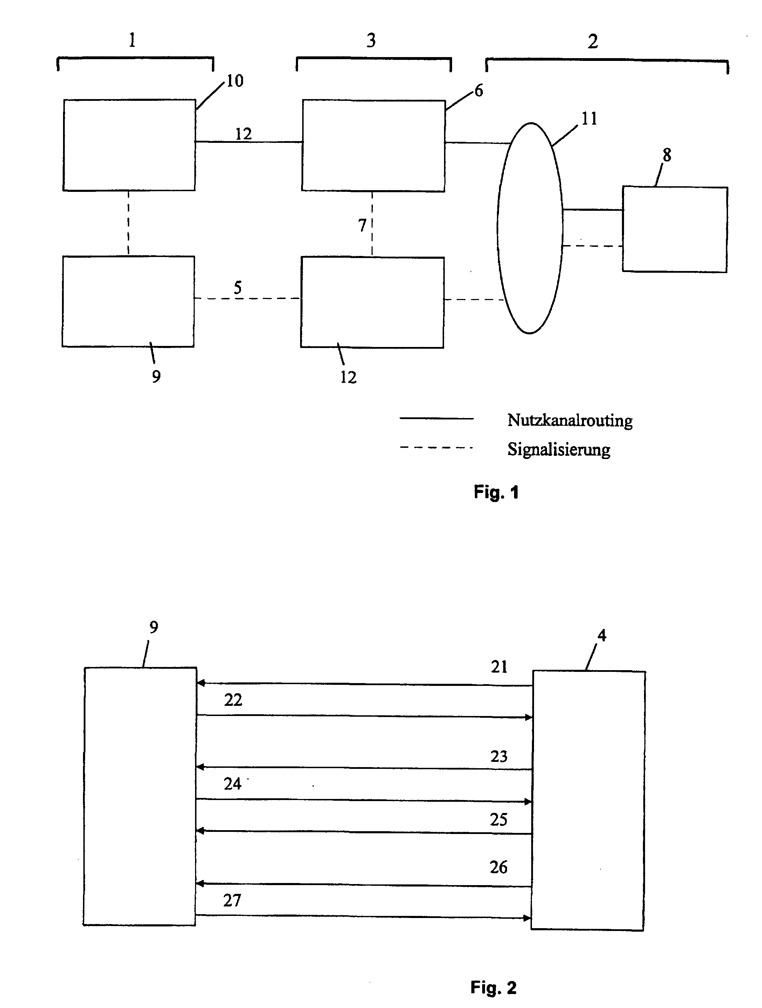

### Figur 1 erläutert die Netzstruktur:

Die Zusammenschaltung zwischen GSM-Netz 1 und TFTS-Netz 2 erfolgt durch ein spezielles TFTS-LocationRegister 4 (TFTS-LR), welches in Richtung GSM-Netz 1 die MAP-Schnittstelle 5 und in Richtung TFTS-Netz 2 die Signalisierung des TFTS internen Netzes 11 unterstützt. Die Funktion des TFTS-LR 4 besteht zum einen darin, für im TFTS-Netz 2 registrierte GSM-Teilnehmer Teilnehmerdatensätze wie weiter unten beschrieben, anzulegen. Dazu müssen auf der Schnittstelle zu GSM mehrere MAP-Prozeduren unterstützt werden.

Der Übergang vom Festnetz zum TFTS-Netz 2 für ankommende Rufe erfolgt über eine spezielle Gateway Vermittlungsstelle 6 (TFTS-Gateway Mobile Switching Centre), die eine interne Schnittstelle 7 zum TFTS-LR 4 zum Datenaustausch besitzen muß.

### Prinzipielle Funktionsweise:

In einem mit einem TFTS Telefon 8 ausgerüsteten Flugzeug sind eine bestimmte Anzahl von Sitzplätzen mit Handsets, die als Nebenstellen an das TFTS Telefon angeschlossen sind, ausgestattet.
Ein Fluggast, der gleichzeitig GSM-Kunde ist (im folgenden: GSM-Kunde), kann durch Registrierung seiner MSISDN (Mobile Subscriber ISDN Nummer) im Flugzeug dem GSM-Netz 1 bekanntmachen, daß er temporär über das TFTS Netz 2 erreichbar ist. Zur Registrierung des GSM-Kunden müssen folgende Informationen vom TFTS-Netz 2 an die Schnittstelleninstanz TFTS-GSM 3 zwischen GSM-Netz 1 und TFTS-Netz 2 in einer Signalisierungsmeldung übertragen werden:
- MSISDN des GSM-Kunden (Wird vom Handset im Flugzeug abgefragt)
- Zusatzdienst-PIN des GSM-Kunden (Wird vom Handset im Flugzeug abgefragt)
- HandsetNumber (Entspricht der Nebenstellennummer des Handsets im Flugzeug)
- ATEI - Aircarft Terminating Equipment Identification (Eindeutige Geräteidentifikationsnummer)
- GSIC- Ground Station Identity Code (Basisstation über die das Flugtelefon aktuell bedient wird)

Diese Informationen werden in einem Teilnehmerdatensatz im TFTS-LocationRegister 4 (TFTS-LR) gespeichert. Dem GSM-HLR 9 wird die TFTS-LR-Adresse im internationalen Rufnummernformat als aktuelles VLR mitgeteilt. Zusätzlich wird die vom GSM-Teilnehmer eingegebene PIN vom HLR mit der gespeicherten PIN (Call Barring Password) verglichen. Verläuft dieses erfolgreich, so ist die Heimatdatenbank 9 (HLR) des GSM-Teilnehmers darüber informiert, daß der betreffende Teilnehmer sich im TFTS Netz 2 befindet.

Wird die MSISDN des GSM-Teilnehmers angerufen, so wird vom GSM-HLR 9 eine Anfrage bezüglich des genauen Aufenthaltsortes an das TFTS-LR 4 gesendet. Dieses antwortet mit einer Mobile Subscriber Roaming Number(MSRN), die neben der internationalen Zugangsrufnummer der Gateway-Vermittlungsstelle 6 des TFTS Systems zusätzlich die Bezeichnung des Teilnehmerdatensatzes im TFTS-LR 4 enthält. Anhand des Datenrecords ermittelt das TFTS-LR 4 die zum Erreichen des Teilnehmers erforderlichen Daten (GSIC + ATEI + HandsetNumber) und gibt diese ans TFTS-GMSC 6 zum Aufbau eines Gesprächskanals zum Teilnehmer weiter.

Erläuterung der Signalisierungsprozeduren zwischen TFTS-Netz 2 + GSM-Netz 1 anhand der Figuren 2-6.

Im folgenden sind die MAP Prozeduren, die in einem TFTS Switching Subsystem 3 (TFTS SSS = TFTS LR + TFTS GMSC) realisiert sein müssen, aufgelistet. Die angegebenen Prozeduren sind zunächst auf MAP Version 1 (Referenz GSM 09.02 Version 3.8.0) beschränkt.

Registrieren eines GSM-Kunden im TFTS Netz 2 mit PIN (Barring PW) Abfrage (Figur 2)
Procedure for retrieving short message routing information (Ref. GSM 09.02 Version 3.8.0, 5.13.1)

Mit dieser Prozedur wird vom TFTS-LR 4 durch Angabe der MSISDN vom HLR 9 die IMSI angefordert (Schritte 20 und 21). Die Zieladdressierung geschieht über die MSISDN, die Rückaddressierung über die Angabe der SC Adresse des TFTS LR 4.

Location registration (Ref. GSM 09.02 version 3.8.0, 5.2.1)
Updating of subscriber data in visitor location register (Ref. GSM 09.02 Version 3.8.0, 5.6.2.1)

Diese Prozedur verwendet die aus den Schritten 20 und 21 gewonnene IMSI für einen Location Update (Schritt 25) im TFTS-LR 4. Die Zieladressierung zum HLR 9 geschieht über die IMSI-Übersetzung (NP E.214) gemäß Schritt 23. Das HLR 9 speichert die angegebene VLR-Adresse. Das TFTS-LR 4 speichert die HLR Adresse im NP E.164 Format. Die im Rahmen des Update Location durchgeführte Insert_Subscriber_Data Prozedur (Schritt 24) hat für den Einbuchprozess keine Bedeutung, da die entsprechende Service List im TFTS-LR 4 nicht benötigt wird.

Registration of a new password by MS (Ref. GSM 09.02 Version 3.8.0, 5.3.3) Checking of the password by the HLR (Ref. GSM 09.02 version 3.8.0, 5.3.4)

Diese Prozedur veranlaßt das TFTS-LR 4 eine Register_Password Meldung an das HLR 9 zu schicken (Schritt 26). Hierauf wird vom HLR 9 dreimal die Get_Password Prozedur initiiert. Zunächst wird das alte Passwort und anschließend zweimal das neue Passwort abgefragt. Für die TFTS Anwendung sind alle drei Passwörter, die der eingegebenen PIN des GSM-Teilnehmers am TFTS Telefon 8 entsprechen, gleich. Stellt das HLR 9 eine Nichtübereinstimmung der gesendeten PW und des gespeicherten Barring PW fest, so wird eine Negativquittierung (Cause= negative password check) ans TFTS-LR 4 zurückgeschickt. Verläuft der Passwortvergleich erfolgreich wird dies positiv zurückgemeldet (Schritt 27) und der gesamte TFTS-Einbuchvorgang wird erfolgreich abgeschlossen. Diese Quittierung muß dann in geeigneter Form ins TFTS-Netz 2 und letztlich zum Nutzer weitergeleitet werden.

Anruf eines im TFTS-Netz 2 registrierten GSM-Teilnehmers über die MSISDN (Figuren 3 und 4).

Procedure for obtaining routing data (Ref. GSM 09.02 Version 3.8.0, 5.4.2.3 b))

Bei einem ankommenden Anruf für den GSM-Teilnehmer (Schritte 41 und 42) wird vom HLR 9 eine Provide_Roaming_Number Meldung an das gespeicherte VLR (TFTS-LR 4) gesendet (Schritt 31 bzw. Schritt 43). Anhand der mitgesendeten IMSI kann das TFTS-LR 4 den Teilnehmerdatensatz identifizieren und sendet daraufhin eine TFTS-MobileSubscriberRoamingNumber ans HLR 9 zurück (Schritt 32 bzw. Schritt 44):
TFTS-MSRN = Country Code + Networkdestination Code (für TFTS-GMSC 6) + Recordnumber (z.B. 4-stellige Dezimalzahl). Anhand dieser Nummer kann ein direktes Routing vom GSM-Netz 1 (GMSC 10 ) zum TFTS-GMSC 6 erfolgen. Das Routing mittels MSRN erfolgt via CC+NDC (z.B. 49 1719) mittels ISUP-Protokoll 12 (Figur 1) zum TFTS-GMSC 6 (Schritte 45 und 46). Aus den folgenden Ziffern der MSRN kann das TFTS-GMSC 6 mittels interner Datenabfrage ans TFTS-LR 4 die TFTS-subscriber-identity gewinnen (Schritte 47 und 48). Mit dieser TFTS-SI kann dann über das EDSS1 Protokoll das Routing im TFTS-Netz zum Teilnehmer erfolgen (Schritt 49).

Prozedur beim Wiedereinbuchen des GSM-Teilnehmers ins GSM-Netz 1 Location cancellation (Ref. GSM 09.02 Version 3.8.0, 5.2.2) (Figur 5)

Bucht sich ein vorher im TFTS-Netz 2 registrierter Teilnehmer wieder ins GSM-Netz 1 ein, so wird vom HLR eine Cancel_Location Meldung an das zuletzt aktuelle VLR (in diesem Fall das TFTS-LR 4) geschickt (Schritt 51). Der Empfang dieser Meldung im TFTS-LR 4 führt zu einer Löschung des anhand der IMSI identifizierten Teilnehmerrecords (Schritt 52).

Figur 6 zeigt die Dateninhalte im GSM-HLR 9 und im TFTS-LR 4.

### Bezugszeichenliste

- 1: GSM-Netz
- 2: TFTS-Netz
- 3: TFTS-GSM TFTS SSS
- 4: TFTS-LocationRegister
- 5: MAP-Schnittstelle
- 6: Gateway Vermittlungsstelle (TFTS-Gateway)
- 7: Schnittstelle
- 8: TFTS Telefon
- 9: GSM-HLR
- 10: GSM Gateway Vermittlungsstelle
- 11: TFTS internes Netz

- 20: SendRoutinglnfo for SM (MSISDN)
- 21: Routinginfo for SM (IMSI)
- 22: LocationUpdate (IMSI, VLR-Address)
- 23: InsertSubscriberData
- 24: LocationUpdateAccept
- 25: Register Passwort (PIN, PIN, PIN)
- 26: Passwort changed

- 31: ProvideRoamingNumber (IMSI)
- 32: ProvideRoamingNumberResult (MSRN)

- 41: Provide MSISDN
- 42: Provide MSISDN
- 43: Provide IMSI
- 44: Provide MSRN = CC+NDC+RN
- 45: Provide MSRN = CC+NDC+RN
- 46: Provide MSRN = CC+NDC+RN
- 47: Provide Record Number
- 48: Provide TFTS Subscriber Number
- 49: Routing TFTS-SI

- 51: CancelLocation (IMSI)
- 52: CancelLocation

## Patentansprüche

1. Anordnung zur Verknüpfung eines teilnehmerbezogenen Kommunikationsnetzes (1) mit einem nicht-teilnehmerbezogenen Kommunikationsnetz (2), **dadurch gekennzeichnet,**
**daß** in dem nicht-teilnehmerbezogenen Kommunikationsnetz (2) und/oder zwischen dem nicht-teilnehmerbezogenen Kommunikationsnetz (2) und dem teilnehmerbezogenen Kommunikationsnetz (1) zusätzlich Mittel (4) zur Speicherung von aktuellen Teilnehmerinformationen eines im nicht-teilnehmerbezogenen Kommunikationsnetz (2) registrierten Teilnehmers des teilnehmerbezogenen Kommunikationsnetzes (1) vorgesehen sind.

2. Anordnung nach Anspruch 1, **dadurch gekennzeichnet,**
**daß** das Speichermittel (4) direkt und/oder über eine Schnittstelleneinrichtung (6) mit dem nicht-teilnehmerbezogenen Kommunikationsnetz (2) verbunden ist.

3. Verfahren zur Verknüpfung eines teilnehmerbezogenen Kommunikationsnetzes (1) mit einem nicht-teilnehmerbezogenen Kommunikationsnetz(2), **dadurch gekennzeichnet, daß** nach einer Registrierung eines Teilnehmers des teilnehmerbezogenen Kommunikationsnetzes (1) in dem nicht-teilnehmerbezogenen Kommunikationnetz (2) in dem nicht-teilnehmerbezogenen Kommunikationsnetz (2) und/oder zwischen dem nicht-teilnehmerbezogenen Kommunikationsnetz (2) und dem teilnehmerbezogenen Kommunikationsnetz (1) aktuelle Teilnehmerinformationen in einem zusätzlichen Speichermittel (4) gespeichert werden.

4. Verfahren nach Anspruch 3, **dadurch gekennzeichnet,**
**daß** im Bereich des Speichermittels (4) eine Umsetzung der Signalisierung des teilnehmerbezogenen Kommunikationsnetzes (1) auf die Signalisierung des nicht-teilnehmerbezogenen Kommunikationsnetzes (2) und umgekehrt erfolgt.

## Claims

1. Arrangement for interconnecting a customised communication network (1) to a non-customised communication network (2), **characterised in that** means (4) for storing current subscriber information on a subscriber of the customised communication network (1) registered in the non-customised communication network (2) are also provided in the non-customised communication network (2) and/or between the non-customised communication network (2) and the customised communication network (1).

2. Arrangement according to claim 1, **characterised in that** the storage means (4) is connected directly and/or via an interface device (6) to the non-customised communication network (2).

3. Method for interconnecting a customised communication network (1) to a non-customised communication network (2), **characterised in that** current subscriber information is stored in an additional storage means (4) following a registration of a subscriber of the customised communication network (1) in the non-customised communication network (2) in the non-customised communication network (2) and/or between the non-customised communication network (2) and the customised communication network (1).

4. Method according to claim 3, **characterised in that** the signalling of the customised communication network (1) is converted to the signalling of the non-customised communication network (2) and vice versa in the region of the storage means (4).

## Revendications

1. Dispositif pour relier un réseau de communication pour abonnés (1) à un réseau de communication pour non abonnés (2), **caractérisé en ce que** dans le réseau de communication pour non abonnés (2) et/ou entre celui-ci et le réseau de communication pour abonnés (1), il est prévu en supplément des moyens (4) pour stocker des informations d'abonné du moment qui concernent un abonné, enregistré dans le réseau de communication pour non abonnés (2), du réseau de communication pour abonnés (1).

2. Dispositif selon la revendication 1, **caractérisé en ce que** le moyen de stockage (4) est relié directement et/ou par l'intermédiaire d'un dispositif d'interface (6) au réseau de communication pour non abonnés (2).

3. Procédé pour relier un réseau de communication pour abonnés (1) à un réseau de communication pour non abonnés (2), **caractérisé en ce que**, après un enregistrement d'un abonné, du réseau de communication pour abonnés (1) dans le réseau de communication pour non abonnés (2), des informations d'abonné du moment sont stockées dans un moyen de stockage supplémentaire (4), dans le réseau de communication pour non abonnés (2) et/ou entre celui-ci et le réseau de communication pour abonnés (1).

4. Procédé selon la revendication 3, **caractérisé en ce que** dans la zone du moyen de stockage (4), une conversion de la signalisation du réseau de communication pour abonnés (1) vers la signalisation du réseau de communication pour non abonnés (2), et inversement, a lieu.
